Europäisches Patentamt

European Patent Office

Office européen des brevets

(19)

(11) Veröffentlichungsnummer : **0 106 014**
**B2**

(12) **NEUE EUROPÄISCHE PATENTSCHRIFT**

(45) Veröffentlichungstag der neuen Patentschrift :
24.01.90

(51) Int. Cl.⁵ : **B 60 T   8/22**

(21) Anmeldenummer : 83105697.3

(22) Anmeldetag : 10.06.83

(54) Lastabhängiger Bremskraftregler.

(30) Priorität : 24.09.82 DE 3235356

(43) Veröffentlichungstag der Anmeldung :
25.04.84 Patentblatt 84/17

(45) Bekanntmachung des Hinweises auf die Patenterteilung : 27.08.86 Patentblatt 86/35

(45) Bekanntmachung des Hinweises auf die Entscheidung
über den Einspruch : 24.01.90 Patentblatt 90/04

(84) Benannte Vertragsstaaten :
DE FR GB IT NL SE

(56) Entgegenhaltungen :
CH--A--   256 604
DE--A-- 2 823 221
DE--B-- 1 287 960
DE--C-- 1 934 784
FR--A-- 1 034 290

(73) Patentinhaber :  WABCO  Westinghouse  Fahrzeugbremsen GmbH
Am Lindener Hafen 21 Postfach 91 12 80
D-3000 Hannover 91 (DE)

(72) Erfinder : **Fauck, Gerhard, Ing. grad.**
Tiergartenstrasse 156
D-3000 Hannover 71 (DE)
Erfinder : Deike, Karl-Heinz, Ing. grad.
Feldstrasse 17
D-3017 Pattensen (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

EP 0 106 014 B2

## Beschreibung

Die Erfindung betrifft einen lastabhängigen Bremskraftregler für druckmittelbetätigte Bremsanlagen gemäss dem Oberbegriff des Patentanspruchs 1.

Durch die deutsche Patentschrift DE-C-1 934 784 ist ein derartiger Bremskraftregler bekannt geworden, welcher eine Einrichtung zum Fixieren des Stellgliedes während des Bremsvorganges aufweist. Mit einer solchen Einrichtung ausgerüstete Bremskraftregler werden insbesondere bei Anhänger-Fahrzeugen an der Vorderachse angeordnet, da bekanntlich die Vorderachse in stärkerem Masse als die Hinterachse beim verzögern des Fahrzeuges der dynamischen Achslastverlagerung ausgesetzt ist. Die durch die dynamische Achslastverlagerung ausgelösten starken Nickbewegungen der Vorderachse würden bei einem Bremskraftregler, der keine Einrichtung zum Fixieren des Stellgliedes aufweist, eine Verstellung des Bremskraftreglers hervorrufen, woraus eine progressiv fortschreitende Abbremsung resultieren würde.

Die Einrichtung zum Fixieren des Stellgliedes besteht bei dem aus der DE-C-1 934 784 bekannten Bremskraftregler aus einem das Stellglied umgebenden Feder-Klemmring und einem koaxial zum Stellglied angeordneten, in axialer Richtung mit dem Feder-Klemmring in Wirkverbindung bringbaren Kolben. Wird der Kolben mit dem Bremsdruck beaufschlagt und auf diese Weise gegen den Feder- Klemmring gedrückt, so verringert sich der Innendurchmesser des Feder-Klemmringes und das Stellglied wird solange in seiner momentanen Position gehalten, bis der Bremsdruck weggenommen wird.

Ein weiterer, mit einer Einrichtung zum Fixieren des Stellgliedes versehener Bremskraftregler für hydraulische Bremsanlagen ist aus der DE-A-28 23 221 bekannt. Als Klemmeinrichtung dient eine das Stellglied umschliessende Lippendichtung, die in einer Kammer gelagert ist, durch welche das Stellglied hindurchgeführt ist. Die Lippendichtung hat ausser der Klemmfunktion die Aufgabe, das Austreten von Hydrauliköl aus dem Bremskraftregler zu verhindern.

Da bei Verwendung einer Lippendichtung als Stangen- oder auch Wellendichtung die Lippendichtung in axialer Richtung mit Spiel eingebaut werden muss, um Stauchungen und daraus resultierende Unebenheiten in der Anlagefläche zu vermeiden, ist ein Verschieben des Stellgliedes in axialer Richtung während des Klemmvorganges möglich.

Der Erfindung liegt deshalb die Aufgabe zugrunde, einen lastabhängigen Bremskraftregler der eingangs genannten Art zu schaffen, dessen Einrichtung zum Verhindern einer Bewegung des Stellgliedes in axialer Richtung einfach im Aufbau und funktionssicher in allen Betriebsweisen ist und darüber hinaus die Möglichkeit bietet, Bewegungen des Stellgliedes in axialer Richtung bzw. Bewegungen von mit dem Stellglied zusammenwirkenden Teilen zu dämpfen. Diese Aufgabe wird mit der im Patentanspruch 1 angegebenen Erfindung gelöst.

Weiterbildungen und vorteilhafte Ausgestaltungen der Erfindung werden in den Unteransprüchen aufgezeigt.

Die Erfindung bietet insbesondere den Vorteil, den Bremskraftregler sowohl als statischen als auch als dynamischen Regler einsetzen zu können.

Gemäss einer vorteilhaften Weiterbildung der Erfindung können die Mittel zum Verhindern einer Verschiebebewegung des Stellgliedes auch zum Verzögern der axialen Bewegungen des Stellgliedes bzw. zum Dämpfen der Bewegungen der Antriebselemente für das Stellglied verwendet werden, wodurch eine bessere Qualität der Regelung erzielt wird.

Anhand der Zeichnungen werden nachstehend zwei Ausführungsbeispiele der Erfindung näher erläutert.

Es zeigen :

Fig. 1 einen mechanisch betätigten Bremskraftregler mit einem ringförmigen, elastischen Körper, welcher durch Druckbeaufschlagung am Umfang des Stellgliedes des Bremskraftreglers zur Anlage bringbar ist ;

Fig. 2 einen Ausschnitt eines mechanisch betätigbaren Bremskraftreglers mit einem das Antriebselement für das Stellglied umgebenden elastischen ringförmigen Körper, wobei die Druckbeaufschlagung des elastischen Körpers über eine Drossel erfolgt.

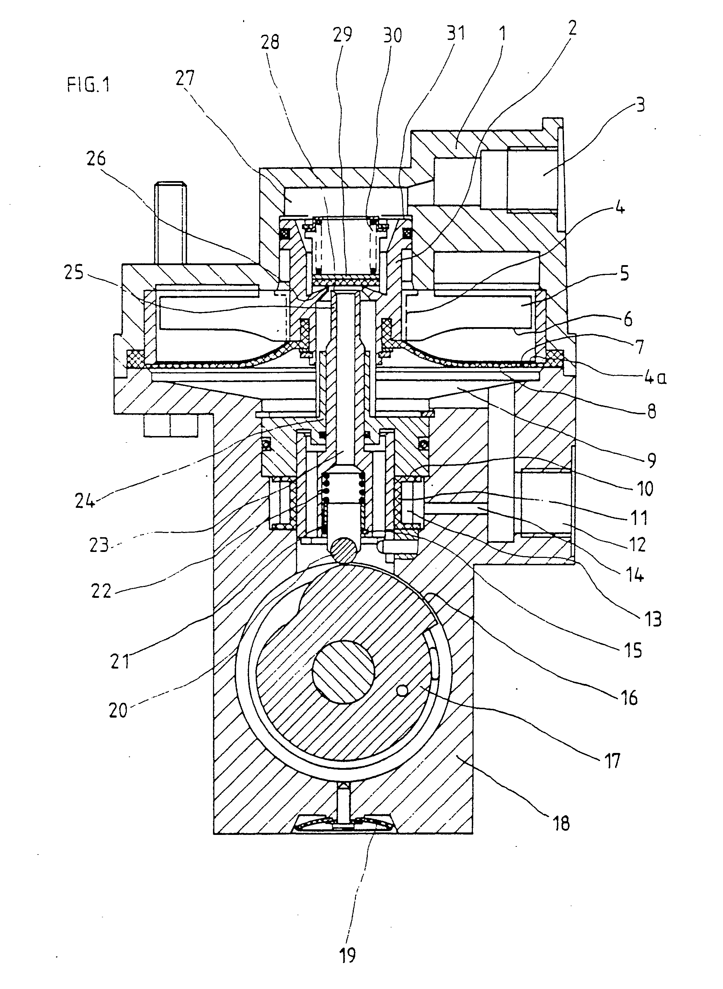

In Fig. 1 ist in einem oberen Gehäuseteil 1 ein aus einem Kolben 2 und einer Membran 7 bestehender, als Stufenkolben ausgebildeter Bremsdruck-Regelkolben angeordnet. Im Stufenkolben 2, 7 ist ein Doppelsitzventil vorgesehen, welches einen unter Spannung einer Druckfeder 30 stehenden Ventilkörper 29 aufweist. Der Ventilkörper 29 bildet einerseits mit einem ringförmigen Vorsprung 26, welcher an der Innenwand des Kolbens 2 angeordnet ist, ein Einlassventil 29, 26 und andererseits mit der als Ventilsitz 28 ausgebildeten oberen Stirnfläche eines unter dem Ventilkörper 29 angeordneten Stellgliedes 25 ein Auslassventil 29, 28. Mit dem Kolben 2 ist eine Anzahl radialer Rippen 5 verbunden, deren der Membran zugewandte Stirnflächen 6 Teile eines Kegelmantels bilden. Im Gehäuseteil 1 ist eine Anzahl radialer feststehender Rippen 4 vorgesehen, in deren Zwischenräume die Rippen 5 berührungslos eingreifen und deren der Membran 7 zugewandte Stirnflächen 4a Teile eines entgegengesetzten Kegelmantels bilden. Die Membran 7 ist mit ihrem Aussenrand im Gehäuse und mit ihrem Innenrand am Kolben 2 befestigt. Auf diese Weise wird der Bremsdruck- Regelkolben 2, 7 gebildet, dessen Stirnfläche eine obere unveränderliche Wirkfläche bildet, die ihrerseits Teil einer oberhalb des Kolbens 2 angeordneten ersten Steuerkammer 27 ist. Die erste Steuerkammer 27 ist über einen Druckmittelanschluss 3 mit dem Motorwagen-Bremsventil bzw. mit dem Anhänger-Bremsventil verbindbar.

Der Stufenkolben 2, 7 weist ferner eine untere Wirkfläche 8 auf, die mit der Bewegung des Kolbens 2 veränderlich ist und Teil einer unter der Membran 17 liegenden, als Ausgangskammer dienenden zweiten Steuerkammer 9 ist, welche mit einem Druckmittelanschluss 12 in Verbindung steht, der zu den Bremszylindern führt.

In einer im Gehäuseunterteil 18 vorgesehenen Führung 24 wird das Stellglied 25 geführt, welches einen in Richtung seiner Längsachse verlaufenden Entlüftungskanal 23 aufweist. Der Entlüftungskanal 23 ist über eine Entlüftung 19 mit der Atmosphäre verbindbar. Das Stellglied 25 weist an seiner dem Ventilkörper 29 abgewandten Stirnseite einen rollenförmigen Körper 20 auf, welcher auf der schrägen Fläche der Steuerkurve 16 eines als Kurvenscheibe 17 dienenden Antriebselementes aufliegt, dessen Stellung von der Fahrzeugbeladung abhängig ist. Der rollenförmige Körper 20 ist in einer Hülse 21 gelagert, die im Stellglied 25 verschiebbar angeordnet ist und von einer Feder 22 in Richtung auf die Kurvenscheibe 17 zu belastet wird. Mittels eines Anschlages 15 wird die Hülse 21 im Stellglied 26 gesichert. Unterhalb der Führung 24 des Stellgliedes 25 ist eine zum Stellglied 25 hin offene Ausnehmung 10 vorgesehen, in der ein das Stellglied 25 umschliessender, als Klemmelement 11 dienender elastischer Ring gelagert ist. Der Ring 11 weist U-Profil auf und ist so angeordnet, dass seine beiden freien Schenkelenden dem Boden der Ausnehmung 10 zugewandt sind. Vom Boden der Ausnehmung 10 und dem elastischen Ring 11 wird so eine Druckmittelkammer 13 gebildet, die gegen das Stellglied 25 druckdicht abgeschlossen ist. Über eine im Boden der Ausnehmung 10 vorgesehene Bohrungen 14 ist die Druckmittelkammer 13 ständig mit der als Ausgangskammer dienenden zweiten Steuerkammer 9 verbunden.

Es ist selbstverständlich auch möglich, anstelle einer umlaufenden Ausnehmung mehrere voneinander getrennte Kammern vorzusehen und in jeder Kammer ein Ringsegment aus elastischem Material anzuordnen, dessen Boden die entsprechende Kammer begrenzt. Der das Stellglied 25 umgebende elastische Ring bzw. die Ringsegmente dienen als Bremselement bzw. als Bremselemente für das Stellglied 25.

Die Funktion des erfindungsgemässen Bremskraftreglers wird im folgenden näher erläutert.

Ein vom Motorwagen-Bremsventil bzw. vom Anhänger-Bremsventil kommender Bremsdruck gelangt über den Anschluss 3 in die erste Steuerkammer 27, beaufschlagt die obere Stirnfläche 31 des Kolbens 2 und drückt diesen hinunter. Der Ventilkörper 29 folgt dieser Bewegung unter dem Einfluss der Druckfeder 30 setzt sich auf die als Ventilsitz 28 für das Auslassventil 29, 28 ausgebildete Stirnfläche des Stellgliedes 25 und schliesst somit das Auslassventil 29, 28. Bei weiterem Herunterfahren des Kolbens 2 wird der Ventilkörper 29 mittels des Stellgliedes 25 vom Ventilsitz 26 des Einlassventils 29, 26 abgehoben und so das Einlassventil 29, 26 in die Offenstellung gebracht. Die Druckluft strömt von der ersten Steuerkammer 27 durch das geöffnete Einlassventil 29, 26 in die Ausgangskammer 9 und weiter über den Druckmittelanschluss 12 zu den Radbremszylindern. Durch die Bohrungen 14 gelangt Druckluft in die Druckmittelkammer 13. Der sich in der Druckmittelkammer 13 aufbauende Druck bewirkt ein Ausbeulen des Bodens des elastischen Ringes 11 in Richtung auf das Stellglied 25 zu, wodurch der Innendurchmesser des Ringes 11 verringert wird und zwischen Ring 11 und Stellglied 25 Kraftschluss ensteht. Gleichzeitig werden die Schenkel des U-förmigen Ringes 11 vom Druckmittel in der Kammer 13 gegen die Wandungen der Ausnehmung gedrückt. Während der Abwärtsbewegung des Kolbens 2 löst sich die Membran 7 von den im Gehäuseoberteil 1 angebrachten Rippen 4 und legt sich in zunehmendem Masse an die Rippen 5 des Kolbens 2. Die wirksame Membranfläche wird so laufend vergrössert, bis die Kraft auf die Unterseite des Bremsdruck-Regelkolbens 2, 7 gegenüber der Kraft auf die Oberseite des Bremsdruck- Regelkolbens 2, 7 überwiegt. Dadurch wird der Kolben 2 wieder angehoben und das Einlassventil 29, 26 geschlossen. Eine Bremsabschlussstellung wird erreicht. Der jetzt in dem Brenszylinder herrschende Druck entspricht dem in Abhängigkeit vom Beladungszustand geregelten Druck.

Nach Abbau des Bremsdruckes in der ersten Steuerkammer 27 schiebt das in den Bremszylindern befindliche Druckmittel den Kolben 2 in seine obere Endlage und entweicht durch das sich öffnende Auslassventil 29, 28, durch den Entlüftungskanal 23 des Stellgliedes 25 sowie die Entlüftung 19 zur Atmosphäre. Gleichzeitig wird die Druckmittelkammer 13 über die Bohrungen 14 und die Ausgangskammer 9 entlüftet. Der Innendurchmesser des jetzt druckentlasteten elastischen Ringes 11 erlangt wieder seine ursprüngliche Grösse, so dass das Stellglied 25 wieder freigegeben wird.

Wie allgemein bekannt, ist die Höhe des ausgesteuerten Bremsdruckes abhängig von den vom eingesteuerten bzw. ausgesteuerten Bremsdruck beaufschlagten unterschiedlich grossen Wirkflächen des Bremsdruck- Regelkolbens sowie von der Stellung der mittels der Steuerwelle in unterschiedliche Positionen bringbaren Kurvenscheibe und der Stellung des mit der Kurvenscheibe und dem Doppelsitzventil zusammenwirkenden Stellgliedes.

Durch das Festsetzen des Stellgliedes 25 während des Bremsvorganges wird trotz der während des Bremsvorganges auftretenden dynamischen Achslastverlagerung ein Bremsdruck mit konstanter Steigung ausgesteuert. Da der auf der Kurvenscheibe aufliegende rollenförmige Körper 20 des Stellgliedes 25 federnd gelagert ist, werden Beschädigungen am Stellglied 25 oder auch an den Antriebselementen und eine Verstellung des Gerätes in Richtung Vollast sicher vermieden.

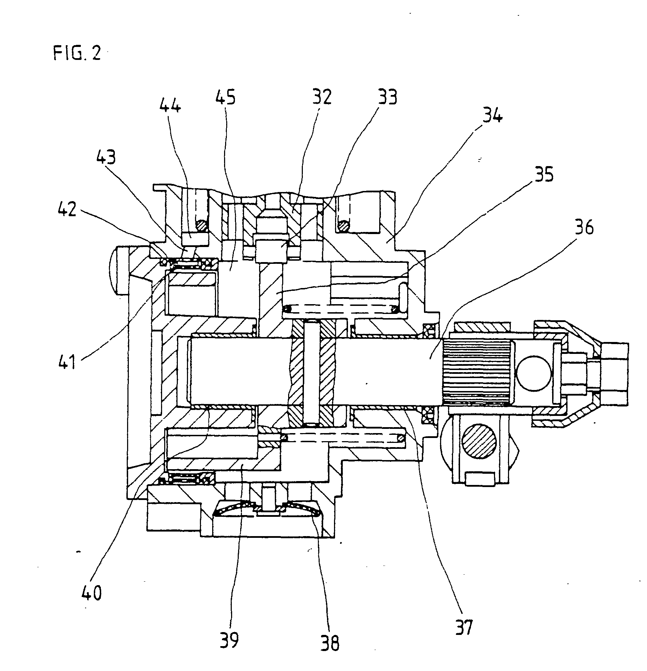

Fig. 2 zeigt einen Ausschnitt eines mechanisch betätigbaren Bremskraftreglers mit einem das Antriebselement für das Stellglied umgebenden elastischen Körper, wobei der elastische Körper über eine Drossel in Richtung auf das Antriebselement zu mit Druck beaufschlagbar ist.

Im unteren Gehäuseteil 34 eines Bremskraftreglers ist in zwei Lagerbuchsen 37, 40 eine Steuerwelle 36 um ihre Längsachse verdrehbar gelagert. Das aus dem Gehäuseteil herausgeführte freie Ende der Steuerwelle 36 ist über ein hier nicht gezeigtes Gestänge mit der Achse des Fahrzeugs verbunden. Auf der Steuerwelle 36 ist eine als Antriebselement für ein Stellglied 32 dienende Kurvenscheibe 35 angeordnet. Das Stellglied 32 besitzt auf seiner der Kurvenscheibe 35 zugewandten Seite einen rollenförmigen Körper 33, welcher sich auf der Anlagefläche der Kurvenscheibe 35 abstützt. Im Boden des unteren Gehäuseteiles ist eine Entlüftung 38 vorgesehen. Oberhalb des die Steuerwelle 36 und die Kurvenscheibe 35 (Antriebselement) aufnehmenden Raumes 45 ist eine Druckmittelausgangskammer 44 vorgesehen, die über eine hier nicht dargestellte kombinierte Einlass- und Auslassventileinrichtung mit einer Druckmitteleingangskammer verbindbar ist. In einer die Druckmittelausgangskammer 44 vom Raum 45 trennednen Wand ist eine Drosselbohrung 43 vorgesehen, über welche eine Druckmittelkammer 42 mit dem Druck aus der Ausgangskammer 44 belüftbar ist. Die Druckmittelkammer 42 wird auf ihrer dem Raum 45 zugewandten Seite von einer als Bremselement 41 dienenden Membran begrenzt, welche parallel zur Längsachse der Steuerwelle 36 verläuft. An der Kurvenscheibe 35, die zusammen mit der Steuerwelle 36 das Antriebselement für das Stellglied 32 bildet, ist ein parallel zur Längsachse der Steuerwelle 36 verlaufender Vorsprung 39 vorgesehen.

Der Vorsprung 39 ist so ausgebildet und so bemessen, dass seine dem Bremselement 41 zugewandte Fläche über den gesamten Verstellbereich der Kurvenscheibe 35 mit dem Bremselement in Wirkverbindung bringbar ist.

Bei Druckeinsteuerung in die Ausgangskammer 44 gelangt über die Drosselbohrung 43 Druckmittel in die Druckmittelkammer 42. Der sich in der Druckmittelkammer 42 langsam aufbauende Druck bewirkt ein Ausbeulen der als Bremselement 41 dienenden Membran in Richtung auf den Vorsprung 39 zu. Das Bremselement 41 legt sich an den Vorsprung 39 an und hemmt so die Verdrehbewegung des Antriebselementes (Steuerwelle 36, Kurvenscheibe 35). Durch Verändern des Drosselquerschnittes ist es möglich, den Verlauf des Druckanstiegs in der Druckmittelkammer 42 zu beeinflussen. Wird anstelle einer Drosselbohrung ein Druckbegrenzungsventil vorgesehen, so ist eine Dämpfung der Verdrehbewegung des Antriebselementes (Steuerwelle, Kurvenscheibe) ohne anschliessende Klemmung möglich.

Es ist auch denkbar, ein Absperrventil vorzusehen, so dass der Bremskraftregler sowohl als statischer Regler als auch als dynamischer Regler eingesetzt werden kann.

Bei pneumatisch oder hydraulisch betätigbaren Bremskraftreglern, die anstelle einer eine Drehbewegung ausführenden Steuerwelle einen mit einer Steuerkurve versehen, eine Verschiebebewegung ausführenden Steuerkolben als Antriebselement für das Stellglied aufweisen, kann das Bremselement im Bereich des Steuerkolbens, der Steuerkurve oder im Bereich von Teilen, die mit dem Steuerkolben bzw. mit der Steuerkurve zusammenwirken, angeordnet werden. Das Bremselement wirkt in diesen Fällen auf den Steuerkolben bzw. auf mit dem Steuerkolben zusammenwirkende Teile ein, so dass eine Bewegung des Steuerkolbens oder/und der mit dem Steuerkolben zusammenwirkenden Teile verzögert oder auch verhindert wird.

Es ist von Vorteil, wenn zwischen dem Stellglied und dem Klemmelement bzw. Bremselement ein Reibelement angeordnet wird. Das Reibelement kann z. B. an der dem Stellglied zugewandten Seite des Klemmelementes bzw. Bremselementes befestigt sein.

## Patentansprüche

1. Lastabhängiger Bremskraftregler für druckmittelbetätigte Bremsanlagen in Motorfahrzeugen und Anhänger-Fahrzeugen, der die folgenden Merkmale aufweist :

a) die Regelgröße von Leerlast bis Vollast ist über ein in Richtung seiner Längsachse bewegbares Stellglied (25, 32) einstellbar ;

b) es sind Mittel zum Verhindern einer Verschiebebewegung des Stellgliedes (25, 32) in Richtung seiner Längsachse vorgesehen ;

c) die Mittel bestehen aus wenigstens einem Klemmelement (11, 41), welches durch die Beaufschlagung einer Druckmittelkammer (13, 42) mit Druckmittel gegen eine Rückstellkraft in seine die Bewegung des Stellgliedes (25, 32) bremsende Stellung bewegbar ist ;

d) die Druckmittelkammer (13, 42) ist druckdicht getrennt von mit dem Stellglied (25, 32) in Wirkverbindung stehenden Teilen (17, 39) angeordnet ;

e) die Druckmittelkammer (13, 42) ist mit dem Eingangsdruck oder mit dem Ausgangsdruck des Bremskraftreglers beaufschlagbar ;

dadurch gekennzeichnet, daß das Klemmelement (11, 41) die Druckmittelkammer (13, 42) begrenzt und die Druckmittelkammer (13, 42) druckdicht getrennt auch von der Fläche des Stellgliedes (25, 32) angeordnet ist, die mit dem Klemmelement (11, 41) in Reibkontakt bzw. in Kraftschluß bringbar ist.

2. Bremskraftregler nach Anspruch 1, gekennzeichnet durch die folgenden Merkmale :

a) die vom Klemmelement (11) begrenzte Druckmittelkammer (13) ist als eine das Stellglied bzw. das mit dem Stellglied in Wirkverbindung stehende Teil teilweise oder vollständig umgebende Kammer ausgebildet ;

b) die Druckmittelkammer (13) wird auf ihrer dem Stellglied (25) bzw. den mit dem Stellglied in Wirkverbindung stehenden Teil zugewandten Seite vom Klemmelement (11) begrenzt ;

  c) das Klemmelement (11) ist so ausgebildet und so angeordnet, dass es die Druckmittelkammer (13) gegen das Stellglied bzw. das mit dem Stellglied in Wirkverbindung stehende Teil druckdicht abschliesst ;

  d) die dem Stellglied bzw. dem mit dem Stellglied in Wirkverbindung stehenden Teil abgewandte Seite des Klemmelementes (11) ist vom Druck aus der Druckmittelkammer (13) beaufschlagt ;

  e) es ist eine Druckmittelverbindung (14) zwischen einer Eingangskammer oder einer Ausgangskammer des Bremskraftreglers einerseits und der vom Klemmelement (11) begrenzten Druckmittelkammer (13) andererseits vorgesehen ;

3. Bremskraftregler nach Anspruch 2, dadurch gekennzeichnet, dass in der zwischen der Druckmitteleingangskammer bzw. der Ausgangskammer und der vom Klemmelement (41) begrenzten Druckmittelkammer (42) vorgesehenen Druckmittelverbindung eine Drossel (43) angeordnet ist.

4. Bremskraftregler nach Anspruch 3, dadurch gekennzeichnet, dass die Drossel (43) einstellbar ist.

5. Bremskraftregler nach Anspruch 2, dadurch gekennzeichnet, dass in der Druckmittelverbindung zwischen der Eingangskammer bzw. der Ausgangskammer und der vom Klemmelement (41) begrenzten Druckmittelkammer (42) eine Ventileinrichtung angeordnet ist.

6. Bremskraftregler nach Anspruch 1, dadurch gekennzeichnet, dass die vom Klemmelement begrenzte Kammer (42) koaxial zu einem mit dem Stellglied in Wirkverbindung stehenden Antriebselement (35) angeordnet ist und dieses teilweise oder vollständig umgibt.

7. Bremskraftregler nach Anspruch 1, dadurch gekennzeichnet, dass die vom Klemmelement (11) begrenzte Kammer koaxial zum Stellglied (25) angeordnet ist und dieses teilweise oder vollständig umgibt.

 8. Bremskraftregler nach Anspruch 1 und Anspruch 2, dadurch gekennzeichnet, dass das Klemmelement als eine die Kammer (13, 42) auf ihrer dem Stellglied bzw. dem mit dem Stellglied in Wirkverbindung stehenden Teil zugewandten Seite verschliessende Membran ausgebildet ist.

9. Bremskraftregler nach Anspruch 1 und Anspruch 2, dadurch gekennzeichnet, dass das Klemmelement (11), ein U-Profil aufweist und derart in der Druckmittelkammer (13) angeordnet ist, dass die offene Seite des U-Profils dem Boden der Druckmittelkammer zugewandt ist und die beiden freien Schenkel des U-Profils dichtend an den beiden einander gegenüberliegenden Wandungen der Druckmittelkammer anliegen.

10. Bremskraftregler nach Anspruch 1 und Anspruch 2, dadurch gekennzeichnet, dass das Klemmelement (11) wenigstens in axialer Richtung des zu klemmenden Teiles formschlüssig im Gehäuse angeordnet ist.

11. Bremskraftregler nach wenigstens einem der vorhergehenden Ansprüche, dadurch gekennzeichnet, dass zwischen dem Klemmelement (11) und dem Stellglied (25) ein Reibelement vorgesehen ist.

12. Bremskraftregler nach Anspruch 11, dadurch gekennzeichnet, dass das Reibelement an der dem Stellglied (25) zugewandten Seite des Klemmelementes (11) angeordnet ist.

## Claims

1. Load-dependent brake force regulator for pressure-medium-actuated braking systems in motor vehicles and trailer vehicles, which brake force regulator has the following features :

  a) the control variable from empty load to full load can be adjusted by means of a regulating member (25, 32) which is movable along its longitudinal axis ;

  b) means are provided for hindering a sliding movement of the regulating member (25, 32) along its longitudinal axis ;

  c) the means comprise at least one clamping element (11, 41) which, when pressure medium is admitted to a pressure-medium chamber (13, 42), can be moved against a restoring force into the position in which it brakes the movement of the regulating member (25, 32) ;

  d) the pressure-medium chamber (13, 42) is arranged so that it is separated in a pressure-tight manner from parts (17, 39) that are in operative connection with the regulating member (25, 32) ;

  e) the pressure-medium chamber (13, 42) can be acted upon by the inlet pressure or the outlet pressure of the brake force regulator ;

characterised in that the clamping element (11, 41) bounds the pressure-medium chamber (13, 42) and the pressure-medium chamber (13, 42) is arranged so that it is separated in a pressure-tight manner also from the surface of the regulating member (25, 32), which can be brought into frictional contact and/or into non-positive connection with the clamping element (11, 41).

2. Brake force regulator according to claim 1, characterised by the following features :

  a) the pressure-medium chamber (13) bounded by the clamping element (11) is in the form of a chamber which surrounds partially or completely the regulating member or the part that is in operative connection with the regulating member ;

  b) the pressure-medium chamber (13) is bounded by the clamping element (11) on its side that faces the regulating member (25) or the part that is in operative connection with the regulating member ;

  c) the clamping element (11) is designed and arranged in such a manner that it closes off in a pressure-tight manner the pressure-medium chamber (13) from the regulating member or the part that is in operative connection with the regulating member ;

  d) the side of the clamping element (11) that is remote from the regulating member or from the part that is in operative connection with the regulating member is acted upon by pressure from the pressure-medium chamber (13) ;

e) there is provided a pressure-medium connection (14) between an inlet chamber or an outlet chamber of the brake force regulator, on the one hand, and the pressure-medium chamber (13) bounded by the clamping element (11), on the other hand.

3. Brake force regulator according to claim 2, characterised in that a throttle (43) is arranged in the pressure-medium connection provided between the pressure-medium inlet chamber or the outlet chamber and the pressure-medium chamber (42) bounded by the clamping element (41).

4. Brake force regulator according to claim 3, characterised in that the throttle (43) is adjustable.

5. Brake force regulator according to claim 2, characterised in that a valve device is arranged in the pressure-medium connection between the inlet chamber or the outlet chamber and the pressure-medium chamber (42) bounded by the clamping element (41).

6. Brake force regulator according to claim 1, characterised it that the chamber (42) bounded by the clamping element is arranged coaxially with a drive member (35) which is in operative connection with the regulating member, and the chamber (42) surrounds this drive member (35) partially or completely.

7. Brake force regulator according to claim 1, characterised in that the chamber bounded by the clamping element (11) is arranged coaxially with the regulating member (25) and surrounds the latter partially or completely.

8. Brake force regulator according to claim 1 and claim 2, characterised in that the clamping element is in the form of a diaphragm which closes the chamber (13, 42) on its side that faces the regulating member or the part that is in operative connection with the regulating member.

9. Brake force regulator according to claim 1 and claim 2, characterised in that the clamping element (11) has a U-shaped profile and is arranged in the pressure-medium chamber (13) in such a manner that the open side of the U-shaped profile faces the base of the pressure-medium chamber and the two free legs of the U-shaped profile rest in a sealing manner against the two opposing walls of the pressure-medium chamber.

10. Brake force regulator according to claim 1 and claim 2, characterised in that the clamping element (11) is arranged to fit the housing at least in the axial direction of the part to be clamped.

11. Brake force regulator according to at least one of the preceding claims, characterised in that a friction member is provided between the clamping element (11) and the regulating member (25).

12. Brake force regulator according to claim 11, characterised in that the friction member is arranged on the side of the clamping element (11) that faces the regulating member (25).

**Revendications**

1. Correcteur de force de freinage répondant à la charge, pour installations de freinage actionnées par un fluide sous pression, dans les véhicules automobiles et les remorques, qui présente les caractéristiques suivantes :

a) la grandeur réglante peut être réglée depuis la charge nulle jusqu'à la pleine charge par un organe de réglage (25, 32) qui peut se déplacer parallèlement à son axe longitudinal ;

b) il est prévu des moyens pour gêner ou interdire le mouvement de translation de l'organe de réglage (25, 32) parallèlement à son axe longitudinal ;

c) ces moyens sont composés d'au moins un élément de serrage (11, 41) qui peut être amené à sa position qui freine le mouvement de l'organe de réglage (25, 32), sous l'effet de l'alimentation d'une chambre à fluide sous pression (13, 42) en fluide sous pression et à l'encontre d'une force de rappel ;

d) la chambre à fluide sous pression (13, 42) est isolée, à joint étanche à la pression, d'éléments (17, 39) qui sont en liaison active avec l'organe de réglage (25, 32) ;

e) la chambre à fluide sous pression (13, 42) peut être sollicitée par la pression d'entrée ou par la pression de sortie du correcteur de force de freinage ;

caractérisé en ce que l'élément de serrage (11, 41) limite la chambre à fluide sous pression (13) et la chambre à fluide sous pression (13, 42) est également disposée isolée, de façon étanche à la pression de la face de l'organe de réglage (25, 32) pouvant être amenée en contact de frottement, ou en liaison de transmission de forces, avec l'élément de serrage (11, 41).

2. Correcteur de force de freinage selon la revendication 1, caractérisé par les caractéristiques suivantes :

a) la chambre à fluide sous pression (13) limitée par l'organe de réglage (11) est constituée par une chambre qui entoure partiellement ou totalement l'organe de réglage ou un élément qui est en liaison active avec l'organe de réglage ;

b) la chambre à fluide sous pression (13) est limitée par l'organe de serrage (11) sur son côté qui est dirigé vers l'organe de réglage (25) ou vers l'élément en liaison active avec l'organe de réglage ;

c) l'organe de serrage (11) est configuré et agencé de telle manière qu'il isole la chambre à fluide sous pression (13), à joint étanche à la pression, de l'organe de réglage ou de l'élément qui est en liaison active avec l'organe de réglage ;

d) le côté de l'élément de serrage (11) qui est le plus éloigné de l'organe de réglage ou de l'élément qui est en liaison active avec l'organe de réglage est sollicité par la pression sortant de la chambre à fluide sous pression (13) ;

e) il est prévu une liaison de transmission du fluide sous pression entre une chambre d'entrée ou une chambre de sortie du correcteur de force de freinage, d'une part, et la chambre de fluide sous pression (13) limitée par l'élément de serrage (11) d'autre part.

3. Correcteur de force de freinage selon la revendication 2, caractérisé en ce qu'un étranglement (43) est agencé dans la liaison de transmission du fluide sous pression prévue entre la chambre d'entrée de fluide sous pression ou la chambre de sortie et la chambre à fluide sous pression (42) limitée par l'élément de serrage (41).

4. Correcteur de force de freinage selon la revendication 3, caractérisé en ce que l'étranglement (43) est réglable.

5. Correcteur de force de freinage selon la revendication 2, caractérisé en ce qu'un dispositif obturateur est agencé dans la liaison de transmission du fluide sous pression établie entre la chambre d'entrée ou la chambre de sortie et la chambre à fluide sous pression (42) qui est limitée par l'élément de serrage (41).

6. Correcteur de force de freinage selon la revendication 1, caractérisé en ce que la chambre (42) limitée par l'élément de serrage est disposée coaxialement à un élément d'entraînement (35) qui est en liaison active avec l'organe de réglage et entoure partiellement ou totalement cet élément.

7. Correcteur de force de freinage selon la revendication 1, caractérisé en ce que la chambre limitée par l'élément de serrage (11) est disposée coaxialement à l'organe de réglage (25) et entoure partiellement ou totalement cet organe.

8. Correcteur de force de freinage selon la revendication 1 ou la revendication 2, caractérisé en ce que l'élément de serrage est constitué par une membrane qui ferme la chambre (13, 42) sur son côté dirigé vers l'organe de réglage ou vers l'élément qui est en liaison active avec l'organe de réglage.

9. Correcteur de force de freinage selon la revendication 1 ou la revendication 2, caractérisé en ce que l'élément de serrage (11) présente un profil en U et est disposé dans la chambre à fluide sous pression (13) de telle manière que le côté ouvert du profil en U soit dirigé vers le fond de la chambre à fluide sous pression et que les deux branches libres du profil en U soient appuyées en formant des joints étanches contre les deux parois de la chambre à fluide sous pression qui se font mutuellement face.

10. Correcteur de force de freinage selon la revendication 1 ou la revendication 2, caractérisé en ce que l'élément de serrage (11) est monté dans le boîtier par une liaison par obstacle, au moins dans la direction axiale de l'élément à serrer.

11. Correcteur de force de freinage selon au moins l'une des revendications précédentes, caractérisé en ce qu'un élément de friction est prévu entre l'élément de serrage (11) et l'organe de réglage (25).

12. Correcteur de force de freinage selon la revendication 1, caractérisé en ce que l'élément de friction est disposé sur le côté de l'élément de serrage (11) dirigé vers l'organe de réglage (25).

FIG.1

FIG. 2